# EUROPÄISCHE PATENTSCHRIFT

(11) **EP 2 748 228 B1**
(45) Veröffentlichungstag und Bekanntmachung des Hinweises auf die Patenterteilung: **09.10.2019**
(21) Anmeldenummer: 12768736.6
(22) Anmeldetag: 20.08.2012
(51) Int. Cl.: C08G 69/18, B01J 2/26, B29B 11/14, B29B 11/16

(54) **VERFAHREN ZUR HERSTELLUNG VON FORMKÖRPERN**
METHOD FOR PRODUCING MOLDED ARTICLES
PROCÉDÉ DE PRODUCTION DE CORPS MOULÉS

(30) Priorität: 23.08.2011 DE 102011110852
(43) Veröffentlichungstag der Anmeldung: 02.07.2014
(73) Patentinhaber: BASF SE, 67056 Ludwigshafen am Rhein (DE)
(72) Erfinder: SCHERZER, Dietrich, 67433 Neustadt (DE); DESBOIS, Philippe, 68535 Edingen-Neckarhausen (DE); GRUBER, Freddy, 76877 Offenbach (DE); STAMMER, Achim, 67251 Freinsheim (DE)
(74) Vertreter: BASF IP Association
(86) Internationale Anmeldenummer: PCT/EP2012/066157
(87) Internationale Veröffentlichungsnummer: WO 2013/026810

(56) Entgegenhaltungen:
- EP-A2- 0 786 485
- DE-A1- 19 933 289
- DE-T2- 60 108 580
- US-A- 3 325 455

## Beschreibung

Die vorliegende Erfindung betrifft ein Verfahren zur Herstellung von Formkörpern umfassend (A) mindestens ein Lactam, (B) mindestens einen Aktivator und (C) mindestens einen Katalysator, wobei (A) bis (C) Behandlungen durchlaufen, umfassend a) Durchmischung von (A), (B) und (C), b) Dosierung von (A), (B) und (C) in eine Vorrichtung zur Erzeugung von Gemischtropfen und Erzeugung von Gemischtropfen und c) Ablage der Gemischtropfen umfassend (A), (B) und (C) auf einem Band und d) Erzeugung von Formkörpern.

Polyamid-Formteile, insbesondere faserverstärkte Polyamidform-Teile, werden in den letzten Jahren vermehrt als Werkstoffe im Ersatz für metallische Werkstoffe beispielsweise im Automobilbau eingesetzt und können sowohl Teile im Motorraum als auch Karosserieteile aus Metall ersetzen. Je nach Anwendung werden zur Herstellung eines Polyamid-Formteils Monomerschmelzen unterschiedlichen Polymerisationsgrades eingesetzt.

Lactame, wie beispielsweise Caprolactam, Lauryllactam, Piperidon und Pyrrolidon, aber auch Lactone, wie Caprolacton, können in einer basenkatalysierten anionischen Polymerisationsreaktion ringöffnend polymerisiert werden. Hierzu wird in der Regel eine Schmelze aus Lactam und/oder Lacton enthaltend einen alkalischen Katalysator und einen so genannten Aktivator (auch Co-Katalysator oder Initiator) bei Temperaturen von etwa 150 °C polymerisiert.

So beschreibt die DE-A 14 20 241 eine anionische Polymerisation von Lactamen in Gegenwart von Kaliumhydroxid als Katalysator und unter Verwendung von 1,6-Bis-(N,N-dibutylureido)-hexan als Aktivator. Die aktivierte anionische Lactampolymerisation unter Verwendung von Natrium-Caprolactam wird beispielweise in Polyamide, Kunststoff Handbuch, Vol. 3/4, ISBN 3-446-16486-3, 1998, Carl Hanser Verlag, S.49-52 und Macromolecules, Vol. 32, No.23 (1993), S. 7726 beschrieben.

DE 601 08 580 T2 offenbart ein Verfahren zur anionischen Polymerisation von Lactamen. In diesem Verfahren werden in Verfahrensschritt a) ein Katalysator und ein Regler in schmelzflüssigem Lactam gelöst. Die Lösung wird gegebenenfalls bis zum festen Zustand in teilbarer Form abgekühlt.

EP 0 786 484 A2 offenbart ein kontinuierliches Verfahren zur aktivierten anionischen Lactampolymerisation, bei dem ein Flüssigsystem zur Anwendung kommt, welches zugleich Aktivator und anionischen Katalysator für die Polymerisation von Lactam enthält.

Aufgabe der vorliegenden Erfindung war, ein Verfahren zur Verfügung zu stellen, das Formkörper zur Verfügung stellt, die aus einer Monomerschmelze und nur bis zu einem niedrigen Massenmittel der Molmasse (Mw) polymerisierten Polymerschmelze bestehen. Aufgabe der Erfindung war es weiterhin, ein Verfahren zur Verfügung zu stellen, das mit einer Anlage durchgeführt werden kann, die wenig Platz beansprucht. Zudem sollte ein Verfahren entwickelt werden, das ein Produkt zur Verfügung stellt, das als solches direkt weiterverarbeitet werden kann. Insbesondere soll das Verfahren ein Produkt zur Verfügung stellen, bei dem auf die sonst in der anionischen Polymerisation übliche fehlerträchtige und aufwendige Zumischen von Additiven vor der formgebenden Weiterverarbeitung verzichtet werden kann.

Der Begriff "Formkörper" ist im Rahmen der vorliegenden Offenbarung ein Partikel, welches bei einer Temperatur von 25 °C fest ist. Bevorzugt ist das erfindungsgemäße Partikel selbst bei höheren Temperaturen, z. B. bei 50 °C, noch fest.

Der Formkörper kann die Form von Pellets oder Schuppen haben.

Zur Erleichterung von Abfüllung, Transport, Lagerung und Weiterverarbeitung im Extruder sollte das Verfahren die Formkörper in einer rieselfähigen Form zur Verfügung stellen. So sollen die Formkörper die Weiterverarbeitung beim Kunden erleichtern.

Unter Formkörpern, die im Wesentlichen aus einer Monomerschmelze und nur bis zu einem niedrigen Massenmittel der Molmasse (Mw) polymerisierten Polymerschmelze bestehen, werden Formkörper verstanden, die im Wesentlichen aus Monomeren bestehen und gegebenenfalls Polyamid mit einem Massenmittel der Molmasse (Mw) von 200 bis 45.000 g/mol aufweisen. Die erfindungsgemäßen bei 25 °C festen Formkörper können einen gewissen Anteil an Polymer enthalten, enthalten jedoch bevorzugt weniger als 50 Gew.-% Polymer, bezogen auf die Summe des Gewichts des Polymeren und des Monomeren. Neben Polyamid können die Formköper Katalysator, Aktivator und gegebenenfalls mindestens einen Zusatzstoff enthalten.

Die erfindungsgemäße Aufgabe wird wie eingangs beschrieben gelöst.

Als Lactame (A) eignen sich insbesondere Caprolactam, Piperidon, Pyrrolidon, Lauryllactam oder deren Mischungen.
Weiterhin ist es auch möglich, anstelle eines Lactams als Monomer eine Mischung von Lactam und Lacton einzusetzen. Als Lactone können beispielsweise Caprolacton oder Butyrolacton eingesetzt werden. Die Menge an Lacton als Comonomer sollte dabei 40 Gew.-% bezogen auf das Gesamtmonomer nicht überschreiten. Bevorzugt beträgt der Anteil an Lacton als Comonomer nicht mehr als 30 Gew.-%, besonders bevorzugt nicht mehr als 20 Gew.-%, bezogen auf das Gesamtmonomer.

In einer bevorzugten Ausführungsform der Erfindung werden ausschließlich Lactame als Monomere verwendet. Insbesondere wird als Lactam (A) mindestens ein Monomer eingesetzt ausgewählt aus der Gruppe bestehend aus Caprolactam, Piperidon, Pyrrolidon, Lauryllactam oder deren Mischungen.

In dem erfindungsgemäßen Verfahren wird ein Katalysator (B) eingesetzt. Unter einem Katalysator für die anionische Polymerisation wird im Rahmen der vorliegenden Erfindung eine Verbindung verstanden, welche die Bildung von Lactam-Anionen ermöglicht. Die Lactamanionen an sich können ebenfalls als Katalysator fungieren.

Derartige Katalysatoren (B) sind dem Fachmann bekannt. Im Rahmen der vorliegenden Erfindung wird bevorzugt ein Katalysator (B) eingesetzt, der ausgewählt ist aus der Gruppe bestehend aus Natriumcaprolactamat, Kaliumcaprolactamat, Bromid-Magnesiumcaprolactamat, Chlorid-Magnesiumcaprolactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kalium, Kaliumhydroxid, Kaliummethanolat, Kaliumethanolat, Kaliumpropanolat, Kaliumbutanolat und deren Mischungen, bevorzugt bestehend aus Natriumcaprolactamat, Kaliumcaprolactamat, Bromid-Magnesiumcaprolactamat, Chloridmagnesiumcaprolactamat, Magnesiumbiscaprolactamat, Natriumhydrid, Natrium, Natriumhydroxid, Natriumethanolat, Natriummethanolat, Natriumpropanolat, Natriumbutanolat, Kaliumhydrid, Kalium, Kaliumhydroxid, Kaliummethanolat, Kaliumethanolat, Kaliumpropanolat, Kaliumbutanolat und deren Mischungen.

Besonders bevorzugt wird ein Katalysator (B) eingesetzt, ausgewählt aus der Gruppe bestehend aus Natriumhydrid, Natrium und Natriumcaprolactamat; besonders bevorzugt ist Natriumcaprolactamat und/oder eine Lösung von Natriumcaprolactamat in Caprolactam (z. B. Brüggolen (Brüggemann, DE) C10; 18 Gew.-% Natriumcaprolactamat in Caprolactamat).

Das Molverhältnis von Lactam (A) zu Katalysator (B) kann in weiten Grenzen variiert werden, es beträgt in der Regel 1 : 1 bis 10000 : 1, bevorzugt 5 : 1 bis 1000 : 1, besonders bevorzugt 1 : 1 bis 500 : 1.

Als Aktivator (C) für die anionische Polymerisation wird eine Verbindung ausgewählt aus der Gruppe der durch elektrophile Reste N-substituierten Lactame, der aliphatischen Diisocyanate, der aromatischen Diisocyanate, der Polyisocyanate, der aliphatischen Disäurehalogenide und aromatischen Disäurehalogenide.

Zu den durch elektrophile Reste N-substituierten Lactamen gehören zum Beispiel Acyllactame. Als Aktivator (C) können auch Vorstufen für solche aktivierten N-substituierten Lactame verstanden werden, welche zusammen mit dem Lactam (A) in situ ein aktiviertes Lactam bilden.

Zu den aliphatischen Diisocyanaten als Aktivator (C) eignen sich Verbindungen wie Butylendiisocyanat, Hexamethylendiisocyanat, Octamethylendiisocyanat, Decamethylendiisocyanat, Undodecamethylendiisocyanat, Dodecamethylendiisocyanat, 4,4'-Methylenbis(cyclohexylisocyanat), Isophorondiisocyanat, aromatische Diisocyanate, wie Toluyldiisocyanat, 4,4'-Methylenbis(phenylisocyanat) oder Polyisocyanate (zum Beispiel Isocyanate von Hexamethylendiisocyanat; Basonat HI 100/BASF SE), Allophanate (zum Beispiel Ethylallophanat). Insbesondere können Mischungen der genannten Verbindungen als Aktivator (C) eingesetzt werden.

Als aliphatische Disäurehalogenide eignen sich Verbindungen wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid, 4,4'-Methylenbis (cyclohexylsäurechlorid), 4,4'-Methylenbis (cyclohexylsäurebromid), Isophorondisäurechlorid, Isophorondisäurebromid; als auch aromatische Disäurehalogenide, wie, Toluylmethylendisäurechlorid, 4,4'-Methylenbis(phenyl)säurechlorid, 4,4'-Methylenbis(phenyl)säurebromid. Insbesondere können Mischungen der genannten Verbindung als Aktivator (C) eingesetzt werden. In einer bevorzugten Ausführungsform wird als Aktivator (C) mindestens eine Verbindung eingesetzt, die ausgewählt ist aus der Gruppe enthaltend Hexamethylendiisocyanat, Isophorondiisocyanat, Hexamethylendisäurebromid, Hexamethylendisäurechlorid oder deren Mischungen; besonders bevorzugt wird Hexamethylendiisocyanat eingesetzt. Geeignet als Aktivator (C) ist beispielsweise Bruggolen C20 (NCO-Gehalt 17%) der Firma Brüggemann, DE.

Die Menge an Aktivator (C) definiert die Anzahl der wachsenden Ketten, da jedes Aktivatormolekül das Anfangsglied einer Polymerkette darstellt. Das Molverhältnis von Lactam (A) zu Aktivator (C) kann in weiten Grenzen variiert werden und beträgt in der Regel 1 : 1 bis 10000 : 1, bevorzugt 5 : 1 bis 2000 : 1, besonders bevorzugt 20 : 1 bis 1000 : 1.

Als Zusatzstoff (D) kann den Formkörpern mindestens eine weitere Komponente zugesetzt werden, die ausgewählt ist aus Füll- und/oder Faserstoffen, Polymeren und weiteren Additiven.

Den Formkörpern kann mindestens ein Polymer zugegeben werden. Den Formkörpern kann beispielsweise ein Polymer und/oder Oligomer zugegeben werden, welches sich in-situ durch Polymerisation der in der Zusammensetzung enthaltenen Monomeren bildet. Dieses optional zugegebene Polymer ist beispielsweise in einer Menge von 0 bis 40 Gew.-%, bevorzugt von 0 bis 20 Gew.-%, besonders bevorzugt in einer Menge von 0 bis 10 Gew.-% enthalten.

Darüber hinaus kann den Formkörpern mindestens ein Polymer zugegeben werden, welches in Form eines Polymers zu der Zusammensetzung zugegeben wird. Diese zugegebenen Polymere können beispielsweise Gruppen enthalten, die zur Bildung von Block- und/oder PfropfCopolymeren mit dem aus dem Lactam gebildeten Polymeren, geeignet sind. Beispiele für solche Gruppen sind Epoxy-, Amin-, Carboxyl-, Anhydrid-, Oxazolin-, Carbodiimid-, Urethan-, Isocyanat- und Lactam-Gruppen.

Zudem besteht die Möglichkeit, zur Verbesserung der Produkteigenschaften, Verträglichkeiten der Komponenten und Viskosität, wenn den Formkörpern mindestens ein Polymer (PM) zuzugeben wird, ausgewählt aus der Gruppe bestehend aus Polystyrol, Styrol-Copolymerisate, wie Styrol-Acrylnitril-Copolymere (SAN), Acrylnitril-Butadien-Styrol-Copolymere (ABS) oder Styrol-Butadien-Copolymere (SB), Polyphenylenoxidether, Polyolefine, wie Polyethylen (HTPE (high-temperature-polyethylene), LTPE (low-temperature-polyethylene)), Polypropylen oder Polybuten-1, Polytetrafluoroethylen; Polyester, wie Polyethylenterephthalat (PET) oder Polyamide; Polyether, zum Beispiel Polyethylenglykol (PEG), Polypropylenglykol oder Polyethersulfone (PESU oder PES); Polymere aus Vinylgruppen enthalten Monomeren, zum Beispiel Polyvinylchlorid, Polyvinylidenchloride, Polystyrol, schlagzäh-modifiziertes Polystyrol, Polyvinylcarbazol, Polyvinylacetat, Polyvinylalkohol, Polyisobutylen, Polybutadien, Polysulfon, und Copolymeren der genannten Polymeren.

Den Formkörpern kann zudem ein vernetzendes Monomer zugegeben werden. Ein vernetzendes Monomer kann eine Verbindung darstellen, die mehr als eine Gruppe enthält, welche mit dem Lactam copolymerisiert werden kann. Beispiele für solche Gruppen sind Epoxy-, Amin-, Carboxyl-, Anhydrid-, Oxazolin-, Carbodiimid-, Urethan-, Isocyanat- und Lactan-Gruppen. Als vernetzende Monomere eignen sich beispielsweise aminosubstituierte Lactame wie Aminocaprolactam, Aminopiperidon, Aminopyrrolidon, Aminolauryllactam oder deren Mischungen, bevorzugt Aminocaprolactam, Aminopyrrolidon oder deren Mischungen, besonders bevorzugt Aminocaprolactam.

Als Füll- und/oder Faserstoff kann den Formkörpern ein organischer oder anorganischer Füll- und/oder Faserstoff zugesetzt werden. Beispielsweise kann ein anorganischer Füllstoff, wie Kaolin, Kreide, Wollastonit, Talkum, Calciumcarbonat, Silikate, Titandioxid, Zinkoxid, Graphit, Glaspartikel, z.B. Glaskugeln, nanoskalige Füllstoff, wie Kohlenstoff-Nanoröhren, carbon black, nanoskalige Schichtsilikate, nanoskaliges Aluminiumoxid (Al₂O₃), nanoskaliges Titandioxid (TiO₂), Carbon-Nanotubes, Graphen, Schichtsilikate und nanoskaliges Siliciumdioxid (SiO₂), eingesetzt werden.

Weiterhin bevorzugt ist der Einsatz von Faserstoffen als Füll- und/oder Faserstoff. Hierbei können ein oder mehrere Faserstoffe zum Einsatz kommen, ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, insbesondere Schnittglasfasern, Kohlenstofffasern, Aramidfasern, Borfasern, Metallfasern oder Kaliumtitanatfasern. Die genannten Fasern können in Form von Kurzfasern, Langfasern oder als Gemisch von Kurz- und Langfasern eingesetzt werden. Hierbei weisen die Kurzfasern vorzugsweise eine mittlere Faserlänge im Bereich von 0,1 bis 1 mm auf. Weiterhin bevorzugt sind Fasern mit einer mittleren Faserlänge im Bereich von 0,5 bis 1 mm. Die eingesetzten Langfasern weisen vorzugsweise eine mittlere Faserlänge von über 1 mm, bevorzugt im Bereich von 1 bis 50 mm auf.

Insbesondere können auch Mischungen der genannten Füll- und/oder Faserstoffe zugesetzt werden. Besonders bevorzugt werden als Füll- und/oder Faserstoff Glasfasern und/oder Glaspartikel, insbesondere Glaskugeln, zugegeben.

Als weitere Additive können beispielsweise Stabilisatoren, wie Kupfersalze, Farbstoffe, Antistatika, Trennmittel, Antioxidantien, Lichtstabilisatoren, PVC-Stabilisatoren, Gleitmittel, Flammschutzmittel, Treibmittel, Schlagzähigkeitsverbesserer und Nukleierungsmittel zugesetzt werden.

Bevorzugt wird als Additiv ein Schlagzähigkeitsverbesserer, insbesondere ein Polydien-Polymer (z.B. Polybutadien, Polyisopren) enthaltend Anhydrid und/oder Epoxigruppen zugegeben. Das Polydien-Polymer weist insbesondere eine Glasübergangstemperatur unter 0 °C, bevorzugt unter -10 °C, besonders bevorzugt unter -20 °C auf. Das Polydien-Polymer kann auf der Basis eines Polydien-Copolymers mit Polyacrylaten, Polyethylenacrylaten und/oder Polysiloxanen basieren und mittels der dem Fachmann bekannten Verfahren hergestellt werden (z.B. Emulsionspolymerisation, Suspensionspolymerisation, Lösungspolymerisation, Gasphasenpolymerisation).

Bei dem erfindungsgemäßen Verfahren zur Herstellung von Formkörpern durchläuft ein Gemisch enthaltend
(A) mindestens ein Lactam
(B) mindestens einen Katalysator
(C) mindestens einen Aktivator ausgewählt aus der Gruppe der durch elektrophile Reste N-substituierten Lactame, der aliphatischen Diisocyanate, der aromatischen Diisocyanate, der Polyisocyanate, der aliphatischen Disäurehalogenide und aromatischen Disäurehalogenide
(D) gegebenenfalls mindestens einen Zusatzstoff ausgewählt aus Füll- und/oder Faserstoffen, Polymeren und weiteren Additiven
Behandlungen, umfassend
a) Durchmischung von (A), (B) und (C) sowie gegebenenfalls (D)
b) Dosierung des Gemisches in eine Vorrichtung zur Erzeugung von Gemischtropfen umfassend (A), (B) und (C) sowie gegebenenfalls (D) und Erzeugung von Gemischtropfen
c) Ablage der Gemischtropfen auf einem Band und
d) Erzeugung von Formkörpern, wobei die Schritte a), b) und c) unabhängig voneinander bei einer Temperatur durchgeführt werden, die im Bereich des Schmelzpunkts des höchst schmelzenden im Gemisch enthaltenen Lactams bis 100 °C oberhalb des Schmelzpunkts des höchst schmelzenden im Gemisch enthaltenen Lactams liegt und
wobei das Band, auf dem in Schritt c) die Gemischtropfen abgelegt werden, auf eine Temperatur im Bereich von 100 °C unterhalb des Schmelzpunkts von (A), (B) und (C) sowie gegebenenfalls (D) bis 20 °C unterhalb des Schmelzpunkts von (A), (B) und (C) sowie gegebenenfalls (D) abgekühlt wird, und
wobei das Band mit einer Geschwindigkeit von 1 bis 20 m/min bewegt wird, und wobei die längste Achse der Formkörper im Bereich von 0,05 bis 15 mm liegt, wobei die Länge der Achsen unter dem Mikroskop an zehn zufällig ausgewählten Partikeln vermessen wird.

Vorzugsweise ergeben die Gewichtsanteile an (A), (B), (C) und (D) in dem Gemisch 100 Gew.-%.

Generell ist es vorteilhaft, Verunreinigungen, wie z.B. Wasser, Kohlendioxid und Sauerstoff, so gering wie möglich zu halten. Insbesondere werden die erfindungsgemäßen Verfahrensschritte unter weitgehendem Ausschluss von Sauerstoff, Kohlendioxid und Wasser durchgeführt. Bevorzugt erfolgen die Schritte a) bis c), insbesondere a) bis d) unter einer Inertgas-Atmosphäre (z.B. unter Stickstoff). Dabei kann das Inertgas im Gleichstrom oder im Gegenstrom zum Beispiel zu der Bandbewegung geführt werden, bevorzugt im Gleichstrom. Vorzugsweise wird das Gas nach einem Durchgang zumindest teilweise, bevorzugt zu mindestens 50 %, besonders bevorzugt zu mindestens 75%, als Kreisgas in den Reaktionsraum zurückgeführt. Üblicherweise wird eine Teilmenge des Inertgases nach jedem Durchgang ausgeschleust, vorzugsweise bis zu 10%, besonders bevorzugt bis zu 3%, ganz besonders bevorzugt bis zu 1%.

In einer anderen Ausführungsform kann an Stelle von Inertgas auch getrocknete Luft verwendet werden. Dabei soll der relative Feuchtigkeitsgehalt der Luft unter 10% liegen. Der relative Feuchtigkeitsgehalt der Luft kann mit einem Haarhygrometer der Firma Fischer, DE bestimmt werden. Unter relativer Luftfeuchtigkeit wird das prozentuale Verhältnis zwischen dem momentanen Dampfdruck des Wassers und dem Sättigungsdampfdruck desselben (bei der Lufttemperatur) über einer reinen und ebenen Wasseroberfläche verstanden.

Die Reaktion kann bei Normaldruck, im Überdruck oder im Unterdruck durchgeführt werden, ein Überdruck von bis zu 300 mbar gegenüber dem Umgebungsdruck, also bis zu 1,3 Atmosphären ist bevorzugt.

Die Schritte a), b) und c) werden unabhängig von einander bei einer Temperatur durchgeführt, die im Bereich des Schmelzpunkts des höchst schmelzenden im Gemisch enthaltenen Lactams bis 100 °C oberhalb des Schmelzpunkts des höchst schmelzenden im Gemisch enthaltenen Lactams liegt. Unter dem Ausdruck "unabhängig voneinander" ist im Rahmen der Erfindung gemeint, dass die Temperatur während der Schritte a), b) und c) nicht identisch sein muss, sondern in den genannten Bereichen variiert werden kann.

Das Vermischen der Komponenten nach Schritt a) kann in einem diskontinuierlichen oder kontinuierlichen Verfahren in dem Fachmann bekannten und geeigneten Vorrichtungen erfolgen. Das Vermischen der Komponenten kann beispielsweise kontinuierlich in einer Niederdruckmischmaschine und/oder diskontinuierlich in einem Rührkessel erfolgen. Bevorzugt erfolgt das Vermischen der Komponenten kontinuierlich in einer Niederdruck-, Hochdruckmischmaschine. Solche Maschinen werden beispielsweise von den Firmen Tartler, DE; Krauss-Maffei, DE; U-nipre, DE oder ATP, CH vertrieben.

Eine besonders bevorzugte Ausführungsform des erfindungsgemäßen Verfahrens ist es, die getrennten Schmelzen aus Lactam, Katalysator und Aktivator jeweils separat bei einer Temperatur knapp oberhalb ihres Schmelzpunktes bereitzustellen, sie danach zu mischen, sie danach auf eine Temperatur knapp oberhalb des Verfestigungspunktes der gemischten Schmelze abzukühlen bevor das Gemisch Schritt b) zugeführt wird.

Nach der Durchmischung erfolgt in Schritt b) die Dosierung des Gemisches in einer Vorrichtung zur Erzeugung von Gemischtropfen enthaltend (A), (B) und (C) sowie gegebenenfalls (D) und Erzeugung von Gemischtropfen.

Die Erzeugung von Gemischtropfen kann durch Versprühen über eine Düse oder über Vertropfen erfolgen. Dabei sind die Vorlagen und Dosierleitungen auf eine Temperatur oberhalb des Schmelzpunkts des verwendeten Lactams (A) erwärmt.

Im Verfahrensschritt b) zur Herstellung von Gemischtropfen können eine oder mehrere Sprühdüsen oder Gießdüsen eingesetzt werden. Die einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE).

Der Durchsatz je Sprühdüse beträgt zweckmäßig 0,1 bis 10 m³/h, häufig 0,5 bis 5 m3/h.

Eine Gemischtropfen-Erzeugung durch laminaren Strahlzerfall, wie in Rev. Sci. Instr. 38 (1966) 502 beschrieben, ist ebenfalls möglich.
Die Gemischtropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Gemischtropfen-Durchmesser beeinflusst werden.

Bei der Gemischtropfen-Erzeugung durch Rotation tritt die Flüssigkeit durch die Öffnungen einer rotierenden Scheibe. Durch die auf die Flüssigkeit wirkende Fliehkraft werden Gemischtropfen definierter Größe abgerissen. Bevorzugte Vorrichtungen zur Rotationsvertropfung werden beispielsweise in DE 43 08 842 A1 beschrieben.

Der austretende Flüssigkeitsstrahl kann aber auch mittels eines rotierenden Messers in definierte Segmente zerschnitten werden. Jedes Segment bildet anschließend einen Gemischtropfen.

Bei Verwendung von Mikroventildüsen werden direkt Gemischtropfen mit definiertem Flüssigkeitsvolumen erzeugt.

Die dosierten Gemischtropfen werden in einem Schritt c) auf einem Band abgelegt. Das Band wird mit einer Geschwindigkeit von 1 bis 20 m/min bewegt. Das Band befindet sich vorzugsweise in einem Raum, der mit einem Inertgas beschickt wird.

In einem Schritt d) werden auf dem Band, auf dem in Schritt c) die Gemischtropfen abgelegt wurden, Formkörper erzeugt. Hierzu wird das Band, auf dem in Schritt c) die Formkörper abgelegt wurden, auf eine Temperatur im Bereich von 100 °C unterhalb des Schmelzpunkts von (A), (B) und (C) sowie gegebenenfalls (D) bis 20 °C unterhalb des Schmelzpunkts von (A), (B) und (C) sowie gegebenenfalls (D) gekühlt. Die Kühlung kann bewirken, dass Formkörper zur Verfügung gestellt werden, die entweder aus einer Monomerschmelze und/oder bis zu einem niedrigen Massenmittel der Molmasse (Mw) polymerisierten Polymerschmelze bestehen.

Die Kühlung der Formkörper erfolgt möglichst innerhalb einer Zeitspanne im Bereich von einer Millisekunde bis zehn Minuten, bevorzugt im Bereich von einer Millisekunde bis fünf Minuten, besonders bevorzugt im Bereich von einer Millisekunde bis einer Minute, ganz besonders bevorzugt im Bereich von einer Millisekunde bis zehn Sekunden. Das Abkühlen des Formkörpers kann insbesondere durch ein Kühlen des Bandes erfolgen. Auch kann ein Abkühlen des Formkörpers durch einen kalten Gasstrom wie einen Stickstoffgasstrom von 0 °C erfolgen.

Die Gemischtropfen, die auf dem Band in Schritt d) zu Formkörpern werden, haben eine Verweilzeit auf dem Band von 20 sec bis 20 min, insbesondere von 40 sec. bis 15 Minuten, bevorzugt von 40 sec bis 10 min.

Die Größe der Formkörper aus dem erfindungsgemäßen Verfahren ist frei wählbar, richtet sich aber im Allgemeinen nach praktischen Gesichtspunkten. Sowohl sehr kleine als auch sehr große Formkörper lassen sich beim Verpacken oder Weiterverarbeiten oft nur schlecht handhaben. Beispielsweise werden sie nur schlecht in die verarbeitende Maschine eingezogen oder lassen sich nur schlecht dosieren. Die Formkörper können länglich bis rund sein. Die längste Achse der Formkörper liegt im Bereich von 0,05 bis 15 mm, bevorzugt im Bereich von 0,1 bis 11 mm, besonders bevorzugt im Bereich von 1 bis 9 mm, zum Beispiel von 3 bis 8 mm und die kürzeste Achse der Formkörper liegt im Bereich von 0,05 bis 15 mm, bevorzugt im Bereich von 0,1 bis 11 mm, besonders bevorzugt im Bereich von 1 bis 9 mm, zum Beispiel von 3 bis 8 mm.
Die Größe und die Form der Formkörper lässt sich beispielsweise über die Größe der Düse durch die die Polymerschmelze gedrückt wird, beeinflussen, aber auch durch den Durchsatz, die Viskosität der Polymerschmelze und die Geschwindigkeit mit der diese zerteilt wird. Derartige Maßnahmen sind dem Fachmann bekannt oder er kann sie nach an sich bekannten Methoden vornehmen (z.B. Granulieren von Thermoplasten: Systeme im Vergleich, Jahrestagung Aufbereitungstechnik, Baden-Baden, 24./25. 11. 99, VDI Verlag S. 327 bis 401).

Die Form und Größe der durch das erfindungsgemäße Verfahren erhaltenen Formkörper eignet sich besonders zur Lagerung, zum Transport und zur Weiterverarbeitung. Gerade die Rieselfähigkeit und die einheitliche Produktgröße der Formkörper ermöglicht eine einfache Weiterverarbeitung mit handelsüblichen Extrudern und/oder Spritzgussmaschinen.

Die erhaltenen bei 25 °C festen Formkörper können über mehrere Monate gelagert und zu einem späteren Zeitpunkt für die Polyamidherstellung eingesetzt werden. Die Polymerisation der Formkörper kann durch Anwendung dem Fachmann bekannter Verfahren wie zum Beispiel Spritzguss, Gießen, Vakuuminjektion oder Extrusion, in der Regel bei Temperaturen im Bereich von 100 bis 250°C, erfolgen.

Die erfindungsgemäßen bei 25 °C festen Formkörper können einen gewissen Anteil an Polymer enthalten, enthalten jedoch bevorzugt weniger als 50 Gew.-% Polymer, bezogen auf die Summe des Gewichts des Polymeren und des Monomeren. Besonders bevorzugt enthalten die erfindungsgemäßen bei 25 °C festen Formkörper nach Variante I weniger als 30 Gew.-% Polymer, bezogen auf die Summe des Gewichts des Polymeren und des Monomeren.

Der beschriebene bei 25 °C feste Formkörper stellt ein wertvolles Zwischenprodukt dar, welches als solches gelagert, transportiert und gehandelt werden kann.

Die erfindungsgemäßen, bei 25 °C festen Formkörper sind mechanisch stabil. Sie können gelagert werden, ohne dass sie chemisch reagieren oder sich verfärben. Die Formkörper zeichnen sich durch hohe Farbstabilität und hohe Lagerstabilität sowie durch eine hohe Reinheit aus.

Das erfindungsgemäße Verfahren zur Herstellung von Formkörpern für die PolyamidHerstellung durch aktivierte anionische Polymerisation von Lactam (A) ist durch den Vorteil gekennzeichnet, dass eine exakte Einstellung des stöchiometrischen Verhältnisses zwischen Lactam (A), Katalysator (B) und Aktivator (C) und Zusatzstoffen (D) möglich ist.

Die Erfindung wird durch die nachfolgenden Beispiele näher erläutert. Diese Beispiele illustrieren einige Aspekte der vorliegenden Erfindung und sind keinesfalls als einschränkend für den Schutzumfang dieser Erfindung anzusehen.

### Vergleichsbeispiel 1

ε-Caprolactam wurde bei 85 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wurde, in einem statischen Mischer kontinuierlich vermischt. Diese Mischung wurde auf 80 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wurde die entstandene Mischung in einen mit Stickstoff inertisierten Sprühturm (auch Prillturm genannt) mittels Zweistoffdüse versprüht. Die Temperatur der Gasphase im Sprühturm betrug 25 °C. Das Vermessen von zehn zufällig gewählten Partikeln unter dem Mikroskop ergab, dass der Wert für die durchschnittlich längste Achse der Partikel zahlengemittelt 160 µm betrug und der Wert für die durchschnittlich kürzeste Achse zahlengemittelt 159 µm betrug.

### Vergleichsbeispiel 2

ε-Caprolactam wurde bei 95 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wurde, in einem statischen Mischer kontinuierlich vermischt. Diese Mischung wurde auf 90 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wurde die entstandene Mischung in einen mit Stickstoff inertisierten Sprühturm mittels Zweistoffdüse versprüht. Die Temperatur der Gasphase im Sprühturm betrug 35 °C. Das Vermessen von zehn zufällig gewählten Partikeln unter dem Mikroskop ergab, dass der Wert für die durchschnittlich längste Achse der Partikel zahlengemittelt 118 µm betrug und der Wert für die durchschnittlich kürzeste Achse zahlengemittelt 123 µm betrug.

### Vergleichsbeispiel 3

ε-Caprolactam wurde bei 95 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wurde, in einem statischen Mischer kontinuierlich vermischt. Diese Mischung wurde auf 95 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wurde die entstandene Mischung in einen mit Stickstoff inertisierten Sprühturm mittels Zweistoffdüse versprüht. Die Temperatur der Gasphase im Sprühturm betrug 50 °C. Das Vermessen von zehn zufällig gewählten Partikeln unter dem Mikroskop ergab, dass der Wert für die durchschnittlich längste Achse der Partikel zahlengemittelt 80 µm betrug und der Wert für die durchschnittlich kürzeste Achse zahlengemittelt 81 µm betrug.

### Beispiel 4

ε-Caprolactam wurde bei 85 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wurde, in einem statischen Mischer kontinuierlich vermischt. Diese Mischung wurde auf 80 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wurde die entstandene Mischung über eine Düse auf Basis einer mehrlöchrigen Scheibe mit Abschlag auf ein auf 25 °C gekühltes Band unter 1,2 Bar (Atmosphären) abgelegt. Die Temperatur der Gasphase über dem Band betrug 25 °C. Das Vermessen von zehn zufällig gewählten Formkörpern unter dem Mikroskop ergab, dass der Wert für die durchschnittlich längste Achse der Formkörper zahlengemittelt 6 mm betrug und der Wert für die durchschnittlich kürzeste Achse zahlengemittelt 3 mm betrug. Die Formkörper sind also scheibenförmig.

### Beispiel 5

ε-Caprolactam wurde bei 85 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wurde, in einem statischen Mischer kontinuierlich vermischt. Diese Mischung wurde auf 80 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wurde die entstandene Mischung über eine durchlöcherte Trommeldüse auf ein auf 25 °C gekühltes Band unter 1,2 Atmosphären abgelegt. Die Temperatur der Gasphase über dem Band betrug 25 °C. Dabei betrug die Bandgeschwindigkeit 2 m/min. Das Vermessen von zehn zufällig gewählten Formkörpern unter dem Mikroskop ergab, dass der Wert für die durchschnittlich längste Achse der Formkörper zahlengemittelt 8 mm betrug und der Wert für die durchschnittlich kürzeste Achse zahlengemittelt 7 mm betrug.

### Beispiel 6

ε-Caprolactam wurde bei 85 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wurde, in einem statischen Mischer kontinuierlich vermischt. Diese Mischung wurde auf 80 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wurde die entstandene Mischung über eine durchlöcherte Trommeldüse auf ein auf 25 °C gekühltes Band unter 1,2 Atmosphären abgelegt. Die Bandgeschwindigkeit betrug 3 m/min. Die Temperatur der Gasphase über dem Band betrug 25 °C. Das Vermessen von zehn zufällig gewählten Formkörpern unter dem Mikroskop ergab, dass der Wert für die durchschnittlich längste Achse der Formkörper zahlengemittelt 5 mm betrug und der Wert für die durchschnittlich kürzeste Achse zahlengemittelt 3 mm betrug.

## Patentansprüche

1. Verfahren zur Herstellung von Formkörpern wobei das Gemisch enthaltend
(A) mindestens ein Lactam
(B) mindestens einen Katalysator
(C) mindestens einen Aktivator ausgewählt aus der Gruppe der durch elektrophile Reste N-substituierten Lactame, der aliphatischen Diisocyanate, der aromatischen Diisocyanate, der Polyisocyanate, der aliphatischen Disäurehalogenide und aromatischen Disäurehalogenide
(D) gegebenenfalls mindestens einen Zusatzstoff ausgewählt aus Füll- und/oder Faserstoffen, Polymeren und weiteren Additiven
Behandlungen durchläuft, umfassend
a) Durchmischung von (A), (B), (C) und gegebenenfalls (D)
b) Dosierung des Gemisches in eine Vorrichtung zur Erzeugung von Gemischtropfen umfassend (A), (B), (C) und gegebenenfalls (D) und Erzeugung von Gemischtropfen
c) Ablage der Gemischtropfen auf einem Band und
d) Erzeugung von Formkörpern
wobei die Schritte a), b) und c) unabhängig voneinander bei einer Temperatur durchgeführt werden, die im Bereich des Schmelzpunkts des höchst schmelzenden im Gemisch enthaltenen Lactams bis 100 °C oberhalb des Schmelzpunkts des höchst schmelzenden im Gemisch enthaltenen Lactams liegt und
wobei das Band, auf dem in Schritt c) die Gemischtropfen abgelegt werden, auf eine Temperatur im Bereich von 100 °C unterhalb des Schmelzpunkts von (A), (B) und (C) sowie gegebenenfalls (D) bis 20 °C unterhalb des Schmelzpunkts von (A), (B) und (C) sowie gegebenenfalls (D) gekühlt wird, und
wobei das Band mit einer Geschwindigkeit von 1 bis 20 m/min bewegt wird, und
wobei die längste Achse der Formkörper im Bereich von 0,05 bis 15 mm liegt und die kürzeste Achse der Formkörper im Bereich von 0,05 bis 15 mm liegt, wobei die Länge der Achsen unter dem Mikroskop an zehn zufällig ausgewählten Partikeln vermessen wird.

2. Verfahren nach Anspruch 1, wobei die Gemischtropfen, die auf dem Band in Schritt d) zu Formkörpern werden, auf dem Band in Schritt d) eine Verweilzeit von 20 sec bis 20 min haben.

3. Verfahren nach einem der Ansprüche 1 oder 2, wobei als Aktivator (C) mindestens eine Verbindung eingesetzt wird, die ausgewählt ist aus der Gruppe enthaltend Hexamethylendiisocyanat, Isophorondiisocyanat, Hexamethylendisäurebromid, Hexamethylendisäurechlorid oder deren Mischungen.

## Claims

1. A process for producing moldings, where the mixture comprising
(A) at least one lactam
(B) at least one catalyst
(C) at least one activator selected from the group of lactams N-substituted by electrophilic radicals, aliphatic diisocyanates, aromatic diisocyanates, polyisocyanates, aliphatic diacyl halides and aromatic diacyl halides
(D) optionally at least one additional substance selected from fillers and/or fibers, polymers and further additives
proceeds through treatments comprising
a) mixing of (A), (B), (C), and optionally (D)
b) metering of the mixture into an apparatus for producing mixture droplets comprising (A), (B), (C), and optionally (D) and producing mixture droplets,
c) depositing the mixture droplets on a belt, and
d) producing moldings
where the steps a), b), and c) are conducted independently of one another at a temperature which is in the range from the melting point of the highest-melting-point lactam comprised in the mixture to 100°C above the melting point of the highest-melting-point lactam comprised in the mixture, and wherein the belt onto which the mixture droplets are deposited in step c) is cooled to a temperature in the range from 100°C below the melting point of (A), (B) and (C) and optionally (D) to 20°C below the melting point of (A), (B) and (C) and optionally (D) and
wherein the belt is moved at a speed of 1 to 20 m/min and
wherein the longest axis of the moldings is in the range from 0.05 to 15 mm and the shortest axis of the moldings is in the range from 0.05 to 15 mm, wherein the length of the axes is measured under the microscope on ten randomly selected particles.

2. The process according to claim 1, wherein the mixture droplets which become moldings on the belt in step d) have a residence time of from 20 sec to 20 min on the belt in step d).

3. The process according to either of claims 1 and 2, wherein at least one compound selected from the group comprising hexamethylene diisocyanate, isophorone diisocyanate, hexamethylenediacyl bromide, hexamethylenediacyl chloride or mixtures thereof.

## Revendications

1. Procédé de fabrication de corps moulés, dans lequel le mélange contenant :
(A) au moins un lactame,
(B) au moins un catalyseur,
(C) au moins un activateur choisi dans le groupe constitué par les lactames N-substitués par des radicaux électrophiles, les diisocyanates aliphatiques, les diisocyanates aromatiques, les polyisocyanates, les halogénures de diacides aliphatiques et les halogénures de diacides aromatiques,
(D) éventuellement au moins un additif choisi parmi les charges et/ou les matières fibreuses, les polymères et les autres additifs,
traverse des traitements, comprenant :
a) le mélange de (A), (B), (C) et éventuellement (D),
b) l'introduction du mélange dans un dispositif pour la formation de gouttes du mélange comprenant (A), (B), (C) et éventuellement (D), et la formation de gouttes du mélange,
c) le dépôt des gouttes du mélange sur une bande, et
d) la formation de corps moulés,
les étapes a), b) et c) étant réalisées indépendamment les unes des autres à une température qui se situe dans la plage allant du point de fusion du lactame contenu dans le mélange ayant le point de fusion le plus élevé à 100 °C au-dessus du point de fusion du lactame contenu dans le mélange ayant le point de fusion le plus élevé, et
la bande sur laquelle les gouttes du mélange sont déposées à l'étape c) étant refroidie à une température dans la plage allant de 100 °C en dessous du point de fusion de (A), (B) et (C), ainsi qu'éventuellement (D), à 20 °C en dessous du point de fusion de (A), (B) et (C), ainsi qu'éventuellement (D), et
la bande étant déplacée à une vitesse de 1 à 20 m/min, et
l'axe le plus long des corps moulés se situant dans la plage allant de 0,05 à 15 mm, et l'axe le plus court des corps moulés se situant dans la plage allant de 0, 05 à 15 mm, la longueur des axes étant mesurée sous le microscope sur dix particules choisies au hasard.

2. Procédé selon la revendication 1, dans lequel les gouttes du mélange qui sont transformées en corps moulés sur la bande à l'étape d) ont un temps de séjour de 20 secondes à 20 minutes sur la bande à l'étape d).

3. Procédé selon l'une quelconque des revendications 1 ou 2, dans lequel au moins un composé qui est choisi dans le groupe contenant le diisocyanate d'hexaméthylène, le diisocyanate d'isophorone, le bromure de l'acide hexaméthylène-dioïque, le chlorure de l'acide hexaméthylène-dioïque ou leurs mélanges est utilisé en tant qu'activateur (C).
